(19) Europäisches Patentamt
European Patent Office
Office européen des brevets

(11) **EP 1 760 363 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(51) Int Cl.:
***F16H 1/12*** *(2006.01)*

(21) Anmeldenummer: **06007574.4**

(22) Anmeldetag: **11.04.2006**

(54) **Antriebsbaugruppe in Form eines Winkelgetriebes für eine Arbeitsmaschine**

Angular gear drive assembly for a working machine

Dispositif d'entraînement à engrenage angulaire pour une machine de travail

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.04.2005 DE 102005016746**

(43) Veröffentlichungstag der Anmeldung:
**07.03.2007 Patentblatt 2007/10**

(73) Patentinhaber: **ASS AG**
**3186 Düdingen (CH)**

(72) Erfinder: **Schoen, Stefan**
**3280 Murten (CH)**

(74) Vertreter: **Bünemann, Egon et al**
**Busse & Busse Patentanwälte**
**Grosshandelsring 6**
**49084 Osnabrück (DE)**

(56) Entgegenhaltungen:
**WO-A-99/58878    WO-A-2004/102036**
**DE-B- 1 195 125    US-A- 1 683 758**
**US-A- 2 311 006**

- **BLOOMFIELD B: "Designing face gears" 1. April 1947 (1947-04-01), MACHINE DESIGN, PENTON MEDIA, CLEVELAND, OH, US, PAGE(S) 129 - 134 , XP008087069 ISSN: 0024-9114**
- **LITVIN F L: "Design and geometrie of face-gears-drives" TRANSACTIONS OF THE ASME JOURNAL OF MECHANICAL DESIGN, AMERICAN SOCIETY OF MECHANICAL ENGINEERS, NEW YORK NY, US, Bd. 114, 1. Januar 1992 (1992-01-01), Seiten 642-647, XP008087044 ISSN: 1050-0472**
- **ROTH K.: "Zahnradtechnik: Evolventen-Sonderverzahnung zur Getriebeverbesserung" 1998, SPRINGER , BERLIN , XP002480766 * Seite 158 - Seite 171 ***
- **G. NIEMANN, H. WINTER: "Maschinenelemente Band III" 1983, SPRINGER VERLAG , XP008091668 * Seite 22 - Seite 33 ***

**Beschreibung**

Die Erfindung betrifft eine Antriebsbaugruppe in Form eines Winkelgetriebes für eine Arbeitsmaschine gemäß dem Oberbegriff des Anspruchs 1.

Bei den im Stand der Technik bekannten Antriebsbaugruppen mit Zahnradgetrieben sind diese in unterschiedlichen Ausführungen weiterentwickelt worden, da die Anforderungen an die mögliche Belastbarkeit, das erreichbare Übertragungsverhalten, die Geräuschentwicklung, die Lebensdauer und die Gestehungskosten eine anwenderspezifische Steigerung erfahren haben. Bei der vergleichsweise einfachsten Ausführung von Zahnradgetrieben mit parallelen Radachsen werden bekannte Stirnradgetriebe eingesetzt, bei denen durch moderne Herstellungsverfahren wesentliche Kostenreduzierungen erreicht worden sind. Für speziellere Antriebsbedingungen mit sich kreuzenden bzw. schneidenden Achsen sind jedoch vorwiegend Kegelradgetriebe vorgesehen, deren allgemeine Nutzung durch aufwendige Herstellung und sehr komplexe geometrische Verhältnisse nach wie vor eingeschränkt ist. Weiterhin ist das Kegelradgetriebe durch sein kegliges Ritzel in seiner axialen Freiheit begrenzt (Roth, K.; Evolventen-Sonderverzahnung zur Getriebeverbesserung; Springer-Verlag Berlin Heidelberg 1998, S. 159-169/13/).

Bei allen Typen von Getrieben tritt auch bei optimaler Anpassung der Bauteile eine thermische Belastung auf, wobei insbesondere in Kegelradgetrieben das am Kegelrad anliegende keglige Antriebsritzel durch diese Erwärmung in seiner axialen Freiheit beeinflußt wird und mit zunehmender Betriebsdauer das aktuelle Betriebsspiel nachteilig vermindert ist. Das Tragbild des Zahneingriffs am Kegelradgetriebe wird dabei ebenfalls verändert, so daß bereits beim Einbau von Kegelrad und kegligem Antriebsritzel ein hoher Aufwand erforderlich ist, um ein annähernd optimales Flankenspiel mit vertretbarem Tragbild zu erreichen. In der Praxis, insbesondere im Automobilbau, wird zur Optimierung der Teileeinstellung des Kegelradgetriebes ein mehrmaliger Ein- und Ausbau mit Kontrollmessungen durchgeführt, um die axiale Lage des Antriebsritzels zu optimieren. Der mit diesen Maßnahmen verbundene Zeit- und Kostenaufwand führt zu einer nachteiligen Erhöhung der Gestehungskosten für derartige Kegelradgetriebe. Besondere Schwierigkeiten bereitet die Anwendung derartiger Kegelradgetriebe bei einem Aluminiumgehäuse aufweisenden Leichtbau, da bei diesen Materialien die Wärmeausdehnung vervielfacht ist und damit die nachteiligen Wirkungen auf das Tragbild und das Betriebsspiel im Bereich der Zahnradteile weiter vergrößert werden. Innerhalb der Kegelradgetriebe entsteht durch den Kegelwinkel außerdem eine zusätzliche pulsierende Axialkraft, die damit auch zusätzliche Vibrationen in das Gesamtsystem einträgt (EP 0 234 058 B1, 1985, /12/).

Zur Überwindung dieser Nachteile von Kegelradgetrieben wird seit Jahrzehnten vorgeschlagen, jeweilige Kronenradgetriebe einzusetzen (US 1,694,028; 04.12.1928, /16/). Mit diesen Kronenradgetrieben soll eine Antriebsbaugruppe erreicht werden, mit der hohe Übersetzungen realisierbar sind. Dabei ist als Antriebsritzel eine mehrgängige Schnecke vorgesehen, deren jeweiliger Steigungswinkel sowie Achsversatz in einem weiten Bereich wählbar ist. An der mehrgängigen Schnecke sind auch unterschiedliche Eingriffswinkel auf der Zug- bzw. Schubflanke der Zähne vorgesehen.

Diese Getriebe sind in der Fachwelt jedoch nur für den Einsatz außerhalb des Hochleistungsbereiches bekannt geworden. Im DUBBEL (17. Auflage, 1987, /3/) wird sogar allgemein festgestellt und als unüberwindliche Grenze definiert, daß Kronenräder nur eine nachteilig begrenzte Tragfähigkeit haben und damit für im Hochleistungsbereich arbeitende Getriebe nicht einsetzbar sind. In /16/ ist ein Kronenradgetriebe vorgeschlagen, bei dem als Ersatz für an sich bekannte Kegelradgetriebe ein Schneckenritzel vorgesehen wird. Eine Anwendung dieses Getriebe-Types im Dauerbetrieb, insbesondere im Automobilbau ist jedoch nicht bekannt geworden.

Gemäß einem Zahnradantrieb in EP 1 203 900 A2 (06.11.2000, /19/) ist ein Antriebskonzept vorgeschlagen, bei dem ebenfalls ein Kronenradgetriebe eingesetzt wird, jedoch ist diese Konstruktion in ihrem Anwendungsbereich dadurch eingeschränkt, daß der vorgesehene Hinterachsantrieb eines Fahrzeugs zu einer Leistungsverzweigung mit doppeltem Kronenrad zu versehen ist. Mit dieser aufwendigen Leistungsverzweigung soll die zu geringe Trag- und Leistungsfähigkeit eines einzigen Kronenrades ausgeglichen werden.

Gemäß einer Lösung in gattungsgemäßen WO 99/58878 (12.05.1998, /17/) wird eine als Hybridgetriebe ausgebildete Antriebskonstruktion mit Kronenrad vorgeschlagen. Als ineinandergreifende Verzahnung wird dabei das Kronenrad ebenfalls mit einer mehrgängigen Evolventenschnecke kombiniert, die durch Höhen- und Breitenballigkeit im Zahnkontakt optimiert werden soll. Für die Zug-Zahnflanke und die Schub-Zahnflanke sind unterschiedliche Grundkreise und damit Eingriffswinkel vorgesehen, wobei der Eingriffswinkel der Schub-Zahnflanke größer ist als der Eingriffswinkel der Zug-Zahnflanke. Obwohl unterschiedliche Eingriffswinkel schon seit langem bei Kronenradzahnrädern zum Einsatz kommen /16/, ist bei dieser Lösung gemäß /17/ festzustellen, daß der ursprüngliche Hauptvorteil der Kronenradverzahnung, nämlich die axiale Freiheit, durch in /17/ vorgesehene Breitenballigkeit des Ritzels wieder eingeschränkt wird. Auch ist der Wirkungsgrad einer Schneckenverzahnung, beispielsweise für die Hochleistungsanforderungen in Kraftfahrzeugen, als zu niedrig anzusetzen. Eine besondere axiale Lage des Antriebsritzels (z.B. einen Achsversatz) beim Einsatz im Hochleistungsbereich ist nicht vorgesehen. Vielmehr wird ein Hochleistungsgetriebe für schneidende Achsen konzipiert, wobei prinzipielle Nachteile für derartige Anordnungen durch die Fachwelt /14/ nachgewiesen sind. Mit dem Vorschlag gemäß /17/ wird das Ziel verfolgt, durch eine höhere Übersetzung des Getriebes (von 1:5 bis 1:10) ein wesentlich verringertes Gewicht des Getriebes zu erreichen, um dieses insbesondere für den Hubschrauberbau einzusetzen. Als Antriebsritzel ist eine sowohl für sich schneidende als auch für sich kreuzende Achsen mehrgängige Evolventenschnecke vorgesehen, die jedoch die bekannten funktionalen Leistungsgrenzen aufweist.

Gemäß DIN 867; 868; 3960 und 3971 (/5/ bis /8/) hat sich auch unter dem Gesichtspunkt von Fertigungs- und Gestehungskosten in der konventionellen Verzahntechnik die Anwendung von Stimradritzeln mit einem Norm-Eingriffswinkel von 20° durchgesetzt, so daß damit ein für viele praktische Anwendungsfälle durchaus geeigneter Antriebsbausatz geschaffen ist. Auch in ersten mathematischen und theoretischen Konzepten zur Dimensionierung und Gestaltung von Kronenrädem (Designing Face Gears, B.; Machine Design, 4/1947; /4/) und Lehrmeinungen der Fachliteratur (DUBBEL-Taschenbuch Maschinenbau, /3/) wird ein Antriebsritzel nach dieser Lehre eingesetzt, Allgemein wird festgestellt, daß Kronenräder nur eine nachteilig begrenzte Tragfähigkeit haben und für im Hochleistungsbereich arbeitende Getriebe nicht einsetzbar sind (Stadtfeld, H.: The Concems in Design, Manufacturing and Service of Face Gears or "Crown Gears", The Gleason Works, Rochester, New York, USA, Oktober 1999, /14/; Litvin, F.L. at all: Design and Geometrie of Face-Gears-Drives, Journal of Mechanical Design, Trans. of the ASME, Vol. 114, Dezember 1992 - I11I).

Auch weitere Fachliteratur (Landvogt, Forschungsheft 563, vom 17.09.1998, "Kronenräder-Erstellung einer Projektstudie", Forschungsvereinigung Antriebstechnik, RWTH Aachen, 1998 /10/; Höhn, Thomas, Michaelis: FZG-Bericht Nr. 1985 vom 10.12.1994, Gutachtediche Untersuchung zur Tragfähigkeit einer Kronenradverzahnung, TU München /9/) listet zwar eine Vielzahl von Lösungsansätzen auf, aber in jedem Falle verbleibt das Problem, daß bei sämtlichen konzipierten Kronenradgetrieben deren Anwendung durch die erreichbare geringe Tragfähigkeit eingeschränkt ist. Als Umgehungslösung kann beispielsweise nur eine Leistungsverzweigung vorgeschlagen werden und diese wird auch praktisch realisiert /19/.

Als eine Form von Sonderverzahnungen (Roth;/13/) werden Kronenradgetriebe umfassend untersucht. In dieser Veröffentlichung (/13/; S. 200-213) wird lediglich die Erkenntnis vermittelt, daß günstige Schrägungswinkel und günstige Achsversetzungen für derartige Kronenrad-Systeme existieren könnten. Dabei werden zwar unterschiedliche technische Merkmale - wie Schrägungswinkel, Eingriffswinkel, Balligkeit usw. - allgemein genannt und in jeweiligen linearen Zusammenhängen definiert, aber für weitgehende praktische Lösungen wird dies nicht berücksichtigt.

In /13/ (S. 200-213) wird in Ansehung einer Darstellung (/13/; Bild 4.24, S. 200) die Schlußfolgerung gezogen, daß erhöhte Tragfähigkeiten nur bei größten Zahnbreiten, d.h. bei geradverzahnten Paarungen und ohne Achsversatz zu erreichen sind; wozu aber Ritzel mit symmetrischem Normprofil zu verwenden sind. Gleichzeitig ist eine bei einem Achsversatz anwendbare Zahnbreite des Antriebsritzels dadurch begrenzt, daß am Innenradius des Kronenrades durch den Eingriffswinkel ein den Eingriffsbereich beschränkender Unterschnitt erzeugt wird (/13/; Kapitel 6.2.3.1, S. 315 und 6.2.4.1, S. 323).

Auch mit den in /13/ beschriebenen Getriebeverbesserungen ist eine für den Anwender unbefriedigende Entwicklung der Leistungsparameter von Zahnradgetrieben, z. B. im Automobilbau, verbunden. Deshalb verwenden die Praktiker bei einer winklige Getriebe erfordernden Konstruktion im Hochleistungsbereich nach wie vor die bekannten Kegelradgetriebe mit entsprechenden Drehmoment- und Drehzahlwerten. Gleichzeitig werden dabei die vorbeschriebenen Nachteile bei der Getriebeherstellung und -montage in Kauf genommen (/12/; EP 1 203 900 /19/; US 2,304,586-1942 /18/; US 2,311,006 - 1941 /15/; PCT/US 99/10527 -1998. /20/).

Die Erfindung befaßt sich erneut mit dem Problem, eine Antriebsbaugruppe in Form eines Winkelgetriebes für eine Arbeitsmaschine zu schaffen, das durch verbesserte Tragfähigkeit im Eingriffsbereich der Verzahnungen eine Übertragung erhöhter Leistungsparameter gewährleistet, mit dem bisher im Getriebebau verwendete Kegelradgetriebe ersetzbar sind und das als eine an weitgehend beliebige Baugrößen sowie Anwendungsfälle anpaßbare Baugruppe bereitgestellt wird.

Die Erfindung löst diese Aufgabe mit einer Antriebsbaugruppe in Form eines Winkelgetriebes mit den Merkmalen des Anspruchs 1. Hinsichtlich wesentlicher weiterer Ausgestaltungen wird auf die Ansprüche 2 bis 13 verwiesen.

Die erfindungsgemäß ausgebildete Antriebsbaugruppe mit Winkelgetriebe ist erstmals mit einem für Hochieistungsparameter ersetzbaren Kronenradgetriebe versehen, dessen jeweilige an Kronenrad und Antriebsritzel vorgesehene Verzahnungsgeometrien für einen in jedem Fall vorgesehenen Achsversatz a des Antriebsritzels optimierbar sind, so daß eine funktionale Einheit für bisher nicht erreichte Anwendungsbereiche gebildet ist. Entsprechend der konzipierten Größe und dem Anwendungsfall des Kronenradgetriebes ist ein drehrichtungsabhängig positiver oder negativer Achsversatz berechenbar. Betrachtungen von Eingriffsverhättnissen bei einem Achsversatz a = 0 sind damit für dieses im Hochleistungsbereich arbeitende Kronenradgetriebe erfindungsgemäßer Konstruktion entbehrlich. Insbesondere ist vorgesehen, Getriebe mit einer dominierenden Vorwärts- und einer gelegentlichen Rückwärtsbewegung im Abtrieb zu realisieren, wie dies im Automobilbau erforderlich ist.

Für dieses Kronenradgetriebe wird der Achsversatz a nunmehr in einem anwendungsoptimalen Bereich dadurch vorgegeben, daß erstmals ein auf den Achsversatz a gerichteter mathematischer Zusammenhang genutzt wird. Mit dieser Vorgabe des Achsversatzes wird der gemeinsame Schnittbereich von zylindrischem Stirnradritzel und kreisringförmigem Kronenrad maximiert. Durch drehrichtungsabhängige Wahl der Steigungsrichtung und der unterschiedlichen Eingriffswinkel von Zug- und Schubflanke kann der Unterschnitt am Innendurchmesser des Kronenrades sicher vermieden bzw. minimiert werden. Durch Anwendung dieses speziellen schrägverzahnten Stirnradritzels mit vergrößerter wirksamer Zahnbreite kann ein Überdeckungsgrad von Ü > 2 in dem Antrieb bzw, dem Getriebe erreicht werden. Wird also ein Kronenradgetriebe mit diesen speziellen Merkmalen ausgebildet, dann kann mit in der Verzahntechnik bekannten Mitteln die Hochleistungsverzahnung optimiert werden. Das neue der erfindungsgemäßen Kombination besteht darin, daß die Hochleistungsverzahnung in einen durch den Achsversatz definierten Bereich gelegt wird, der prinzipiell ein größeres Schnittvolumen aufweist, als ein vergleichbares Kegelradgetriebe. Im bisherigen Stand der Technik ist dieser Bereich unerkannt /14/.

Mit dieser grundlegenden konstruktiven und geometrischen Vorgabe des Achsversatzes a wird erstmals ein Kronenradgetriebe bei winkligen Achsenlagen seiner Bauteile so gestaltet, daß derartige Getriebe an Stelle bisher vorgesehener, groß bauender Kegelradgetriebe in einem diesem entsprechenden Anwendungsbereich zur Übertragung hoher Drehmomente und hoher Drehzahlen einsetzbar sind. Für dieses optimierbare Kronenradgetriebe mit drehrichtungsabhängig vorzugebendem Achsversatz wird insbesondere in beengten Einbauräumen, beispielsweise im Getriebebausatz eines Kraftfahrzeugs, eine effiziente Anwendung erreicht.

Im Unterschied zu einer aus dem Stand der Technik bekannten Vielzahl von Kronenradgetrieben wird die erfindungsgemäße Antriebsritzei-Kronenzahnrad-Baugruppe an einen bisher von der Fachwelt als nicht erreichbar angesehenen Bereich möglicher Drehmoment- und Drehzahlübertragung dadurch angepaßt, daß zu deren Maximierung auf der Grundlage des berechenbaren Achsversatzes a ein maximaler Eingriffsbereich der beiden kämmenden Verzahnungen Z und Z' nutzbar wird. Dabei weisen die beim Zahnkontakt ineinandergreifenden Zähne bzw. die Zahnflanken von Ritzel und Rad jeweils spezielle kombinatorische Merkmale auf, wobei auch als vorteilhaft erkannte Geometrie-Verhältnisse aus dem Stand der Technik für eine verbesserte Übertragungswirkung übernommen werden. Wesentlich ist dabei die konstruktiv umgesetzte Lehre, daß das zylinderförmige Ritzel in einem Abstands-Bereich (drehrichtungsabhängiger Achsversatz -a, +a) zur Ebene der Drehachse des Kronenrades angeordnet sein muß und damit ein maximales Schnittvolumen E definierbar wird.

Ausgehend von analytischen Betrachtungen wird erstmals das Schnittvolumen E (Maßeinheit: $cm^3$) als eine dreidimensionale Ausgangsgröße für einen in einer mathematischen Formel neu definierbaren Zusammenhang genutzt. Damit ist ein bisher von der Fachwelt nicht in die Betrachtungen einbezogener oder sogar als wenig sinnvoll abgelehnter Dimensionierungs- und Positionierungsbereich für Rad und Ritzel als konstruktive Basis vorgegeben. Bisherige ebene (zweidimensionale) Berechnungsansätze werden auf eine dreidimensionale Ausgangsgröße E erweitert, mit der erstmals eine betreffend die Tragfähigkeit und Geräuschentwicklung im Hochleistungsbereich optimierbare Konstruktion und Auslegung von Kronenradgetrieben erreicht wird.

Dieser Lösungsansatz führt in erfindungsgemäßer Kombination an sich bekannter Einzelkenngrößen von Verzahnungsgeometrien dazu, daß in dem Hochleistungs-Kronenrad-Getriebe ein bisher durch Unterschnitt nicht genutzter Flächenteil der kämmenden Zahnräder bzw. -flanken nunmehr zur Momentenübertragung mitgenutzt werden kann und dieser Flächen- bzw. Volumenanteil als berechenbares Kriterium in höhere Belastbarkeit und Tragfähigkeit umgesetzt ist. Als unterscheidendes Merkmal zu bekannten Verzahnungen kommt also auf dem Gebiet der Winkelgetriebe hinzu, daß bei den erfindungsgemäßen Kronenradverzahnungen (ähnlich Kegelrädern) - zusätzlich zum ebenen, wälzfähigen Flankenprofil - die jeweilige Tragfähigkeit maßgeblich durch eine dritte Dimension - nämlich die nutzbare Breite b des Antriebsritzels - definiert ist. Damit wird erfindungsgemäß erstmals ein Kronenradgetriebe geschaffen, bei dem ausgehend von einem berechenbaren Achsversatz a das momentane Maß der verfügbaren Tragflächen auf mehreren Zähnen durch eine zusätzliche optimale Breitenanpassung der Verzahnung(en) gezielt vergrößert und damit konstruktiv genutzt wird, um für ein Kronenradgetriebe die Übertragung von Hochleistungsparametem zu erreichen.

In /17/ ist die Möglichkeit einer Vergrößerung eines derartigen Eingriffsfeldes von Verzahnungen in definierter Abhängigkeit von einer axialen Abstandslage a des Antriebsritzels gerade nicht erkannt worden und auch eine drehrichtungsabhängige Zuordnung von unterschiedlichen Steigungsrichtungen des Schrägungswinkels wird im Stand der Technik nicht in die Betrachtungen einbezogen.

Gemäß Stadtfeld /14/ ist zwar auch darauf verweisen, daß ein Kegelradritzel eine größere Zahnbreite aufweist als ein vergleichbares zylindrisches Stiniradritzel, aber als Schlußfolgerung für die Getriebeentwicklung wird gleichzeitig ein Achsversatz abgelehnt und zwingend ein Achsversatz von a = 0 vorgegeben.

Damit werden lediglich die im umfänglichen Stand der Technik vorliegenden Eingriffsverhältnisse weiterverfolgt, gemäß denen bei a = 0 das Kegelradritzel eine größere Zahnbreite als ein vergleichbares Kronenrad-Ritzel hat. Weiterführende Erkenntnisse, nämlich daß mit dem einen Achsversatz a ‡ 0 aufweisenden Antriebsritzel und einer dann größeren Zahnbreite jeweils höhere Belastbarkeitswerte am Kronenradgetriebe erreichbar sind als bei einer entsprechend dimensionierten Kegelritzel-Kegelrad-Konstruktion, sind aus /14/ gerade nicht entnehmbar.

Diese an sich bekannten Verhältnisse ändern sich jedoch gerade dann, wenn ein antreibendes Stirnradritzel mit einem Achsversatz

$$a = K * (R_a - B - ((2 * z_1 * m^2)^{1/2}))$$

K = 0,9 bis 0,4 (Konstante; bei Antriebsritzel ‡ Schnecke)
$R_a$ = äußerer Radius des Kronenrades
B = Zahnbreite des Kronenrades
$Z_1$ = Zähnezahl des Antriebsritzels
m = $m_n$- Normalmodul

gemäß der vorliegenden Erfindung eingebaut wird. Mit einer durch diese vergleichsweise einfachen Berechnungsformel für den Achsversatz a vorgegebenen und an die Konstruktion anpaßbaren Einbaulage des Ritzels wird in Zusammenhang mit den optimal anzupassenden Konsiruktions-Parametern (nämlich: Eingriffswinkelveränderung, asymmetrische Verzahnung, Steigungsrichtung der Zähne, tangentiale Kantenrücknahme) an sich bekannter Verzahnungsgeometrien des Kronenrades eine überraschende Steigerung der Leistungsparameter in dem genannten Schnittvolumen erreicht. Festzustellen ist auch, daß Kronenradgetriebe mit schneidender Achse auch bei bester Auslegung der Verzahnungswerte die Leistungsfähigkeit von Hochleistungs- Kegelradgetrieben nicht vollständig erreichen können.

Mit den erfindungsgemäßen geometrisch-konstruktiven Änderungen ist ab einem bestimmten positiven oder negativen Achsversatz a das entsprechend optimierbare Schnittvolumen E einer stimeradritzel-Kronenzahnrad-Kombination größer als das einer vergleichbaren Kegelritzel-Kegelrad-Kombination. Gleichzeitig wird mit Veränderungen der Verzahnung und des daraus resultierenden Zahneingriffs die Voraussetzung dafür geschaffen, daß bei optimaler Verzahnungsauslegung auch jeweilige momentane Berührflächen in ihrem Maß vorteilhaft vergrößert werden und damit das Kronenradgetriebe eine bisher von der Fachwelt nicht erkannte Leistungsfähigkeit aufweist. Das als Vergleichsmaß dienende Schnittvolumen E im Überdeckungsbereich der kämmenden Verzahnungen wird um 8 bis 13 % gegenüber bekannten Kegelrad-Varianten erhöht. Damit wird erstmals ein konstruktiv für den Fachmann nutzbarer Eingriffsbereich so definiert, daß mit der erfindungsgemäßen Kronenrad-Antriebsritzel-Kombination eine Übertragung bisher (auch bei Kegelrädern entsprechender Abmessungen) nicht erreichter Leistungsparameter, insbesondere hoher Drehmomente und Drehzahlen, möglich ist.

Der erfindungsgemäße Antrieb kann einen weiteren wesentlichen Vorteil eines Kronenrad-Triebes dann nutzen, wenn das hochbelastbare Antriebsritzel beidseitig zum Kronenzahnrad auf einer - im Vergleich zu Kegelradritzeln mit größerem Durchmesser ausführbaren - Antriebswelle gelagert wird und mit dieser doppelten Lagerung hohe Belastungen optimal aufnehmbar sind.

In der zum Stand der Technik zitierten Patent- und Fachliteratur (/3/, /4/, /9/, /10/, /12/ bis /20/) wird eine Vielzahl von Getriebe-Modifikationen deutlich, deren nur auf der Grundlage von 2-dimensionalen Betrachtungen und Berechnungen realisierte Verzahnungsgeometrien in einer praktischen Anwendung, insbesondere bei Kraftfahrzeug-Getrieben, nicht zum Erfolg geführt haben. Ersichtlich werden dabei mit jeweiligen Veränderungen betreffend Höhen- und Breitenballigkeit, Eingriffs- und Schrägungswinkel, Achsversatz, Kantenrücknahmen, Überdeckungsgrad o. dgl. seit langem Versuche unternommen, um mit diesen bekannten Merkmalen von Verzahnungen eine Leistungssteigerung auch an Kronenrädem zu erreichen. Sämtliche dieser Bemühungen sind vor allem für den Automobilbau erfolglos geblieben und ein funktionierendes Hochleistungs-Kronenradgetriebe ist am Markt nicht vorhanden. Gemäß der Erfindung werden neue Kombinstionseffekte genutzt, mit denen ein überraschender Qualitätssprung auf dem Gebiet der Kronenrad-Getriebe verbunden ist. Damit wird in einem technologisch ausgereiften Gebiet eine Leistungssteigerung erreicht, die im aufgezeigten Stand der Technik ohne Vorbild ist und kleinbauende Antriebsbaugruppen mit hoher Leistungsübertragung für ein breites Anwendungsgebiet bereitstellt.

Weitere Einzelheiten und vorteilhafte Wirkungen der Erfindung ergeben sich aus der nachfolgenden Beschreibung und der Zeichnung, in der der Gegenstand der Erfindung anhand eines Ausführungsbeispiels näher veranschaulicht ist. In der Zeichnung zeigen:

Fig. 1      eine perspektivische Prinzipdarstellung einer Antriebsbaugruppe mit einem Kronenzahnrad und einem Antriebsritzel in Eingriffsstellung mit negativem Achsversatz,

Fig. 2      eine Perspektivdarstellung ähnlich Fig. 1 mit dem einen positiven Achsversatz aufweisenden Kronenradantrieb,

Fig. 3      eine ebene Prinzipdarstellung der Herstellung eines evolventischen Antriebsritzels, wobei ein Werkzeug in Form eines Wälzfräsers bzw. einer Schleifschnecke ein Zahnstangenprofil mit unsymmetrischen Eingriffswinkeln auf das Antriebsritzel abbildet,

Fig. 4      eine Draufsicht des Kronenrad-Antriebes gemäß Fig. 1 mit geometrischen Bezugsgrößen an Rad und Ritzel,

Fig. 5    eine Draufsicht des Kronenrad-Antriebes gemäß Fig. 2,

Fig. 6    eine stirnseitige Rückansicht des Kronenrad-Antriebes gemäß Fig. 4,

Fig. 7    eine Perspektivdarstellung ähnlich Fig. 1 mit den geometrischen Bezugsgrößen,

Fig. 8    eine Perspektivdarstellung ähnlich Fig. 7 mit einer in Explosivdarstellung verdeutlichten Zone des Eingriffsvolumens der Verzahnung von Rad und Ritzel,

Fig. 9 und Fig. 10    ein Vergleich der Eingriffsverhältnisse zwischen einem Kronenrad-Antrieb und im wesentlichen konstruktionsgleichem Kegelrad-Antrieb,

Fig. 11    eine Vergleichstabelle mit Berechnung des Eingriffsvolumens eines Kronenrad- und eines Kegelrad-Antriebes für einen jeweiligen Durchmesser des Kronenrades von 175 mm,

Fig. 12    eine grafische Darstellung der unterschiedlichen Eingriffsvolumen von Kegelrad- und Kronenrad-Antrieb gemäß der Tabelle in Fig. 11,

Fig. 13    eine vergrößerte Ausschnittsdarstellung des im Kronenrad kämmenden Antriebsritzels gemäß einer Linie XII-XII in Fig. 1,

Fig. 14    eine vergrößerte Ausschnittsdarstellung des im Kronenrad kämmenden Antriebsritzels gemäß Fig. 2 mit einem Schnitt ähnlich Fig.1.

Fig. 15    ein vergrößerter Ausschnitt des Kronenrades gemäß Fig. 1 in Einzeldarstellung mit tangentiale Kantenrücknahmen aufweisender Verzahnung, und

Fig. 16    eine Darstellung ähnlich Fig. 1 mit einem außer Eingriff abgehobenen Antriebsritzel zur Verdeutlichung des Eingriffsbereichs bzw. des Schnittvolumens E.

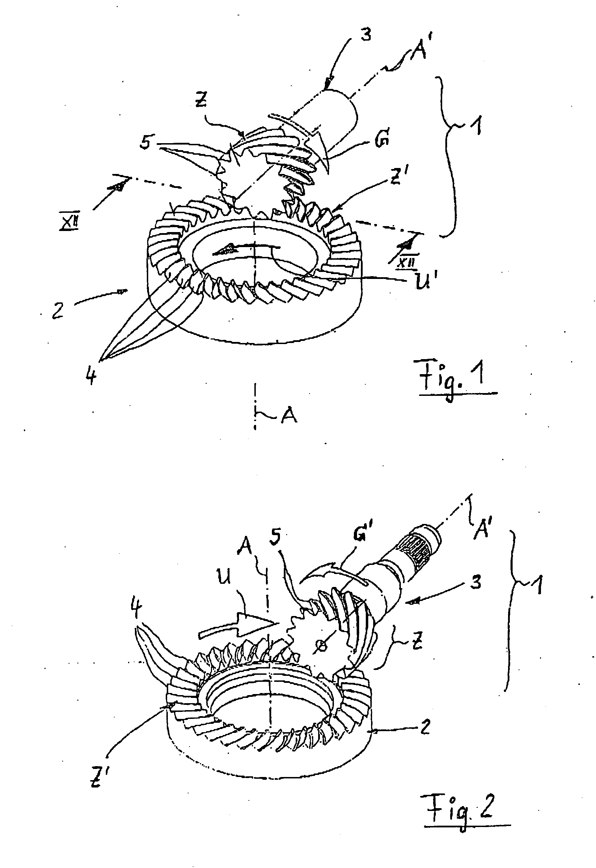

In Fig. 1 ist eine Antriebsbaugruppe mit einem insgesamt als 1 bezeichneten Winkelgetriebe für eine nicht näher dargestellte Arbeitsmaschine verdeutlicht, wobei dieses als Kronenrad-Antrieb bezeichnete Winkelgetriebe 1 insbesondere für einen Kraftfahrzeugantrieb vorgesehen ist, der eine dominierende Vorwärts- und eine nur gelegentliche Rückwärtsbewegung erfordert. Bei diesem Winkelgetriebe 1 ist ein Kronenzahnrad 2 vorgesehen, mit dem ein an sich bekanntes Stirnrad als Antriebsritzel 3 zusammenwirkt. Aus einer Vielzahl bekannter geometrischer Gestaltungsvarianten von Antriebsritzeln 3 ist dieses in Form eines schrägverzahnten evolventischen Stimrades auszuwählen.

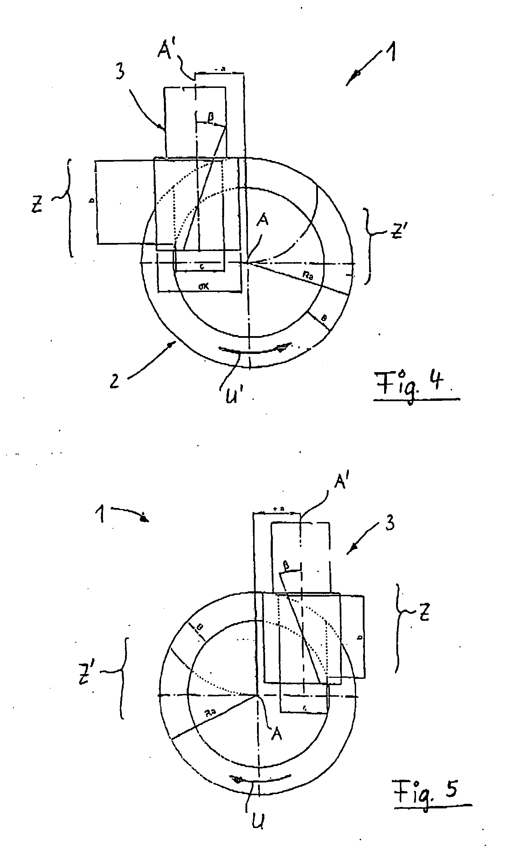

Ausgehend von diesen präzisierenden Kriterien zeichnet sich die erfindungsgemäße Antriebsbaugruppe durch ein Winkelgetriebe 1 aus, das im Bereich des Kronenzahnrades 2 sowie des drehrichtungsabhängig mit positivem oder negativem Achsversatz a (Fig. 4, Fig. 5) zur Antriebsdrehachse A angeordneten Antriebsritzels 3 (Ritzelachse: A') mit einer jeweiligen für den Hochleistungsbereich einsetzbaren Verzahnung Z, Z' ausgebildet wird. Diese Hochleistungsverzahnungen Z, Z' und der entsprechend dem Anwendungsfall wählbare positive bzw. negative Achsversatz a sind dabei so aufeinander abgestimmt, daß das Rad 2 und das Ritzel 3 ein an Stelle eines Kegelradgetriebes in eine Antriebskinematik integrierbares Hochleistungs-Kronenrad-Getriebe bilden, das für bisher nicht erreichte maximale Drehmoment- und/oder Drehzahlübertragungen mit vorzugsweise geringerem Raumbedarf einsetzbar ist (Fig. 1, Fig. 2). Bei der erfindungsgemäß auszulegenden Antriebsbaugruppe sind Betrachtungen mit einem Achsversatz a = 0 (z. B. Stadtfeld /14/) gerade nicht vorgesehen.

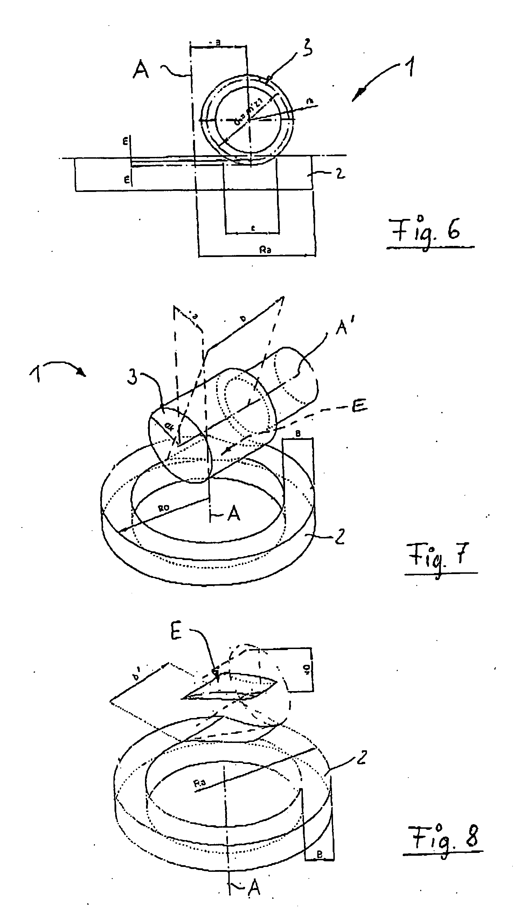

Bei der erfindungsgemäßen Paarung von Hochleistungsverzahnungen Z und Z' wird erstmals ein für jeweilige unterschiedliche Abmessungen von Kronenrad-Ritzel-Kombinationen maximierbares und von einem optimierten Verzahnungseingriff abgeleitetes Schnittvolumen E (Fig. 8) genutzt. Dieses als Ausgangsparameter vorgegebene und auch als "Eingriffsvolumen" definierbare Schnittvolumen E wird dabei ausgehend von einem positiven oder negativen Achsversatz a (Fig. 4, Fig. 5) des zylindrischen Antriebsritzels 3 definiert, wobei dieses Ritzel in seiner Breite b gegenüber den bisher bekannten Ausführungen von Ritzeln vergrößert ist und insbesondere an eine Breite B des Kronenrades 2 optimal angepaßt wird (Fig. 4 bis 8).

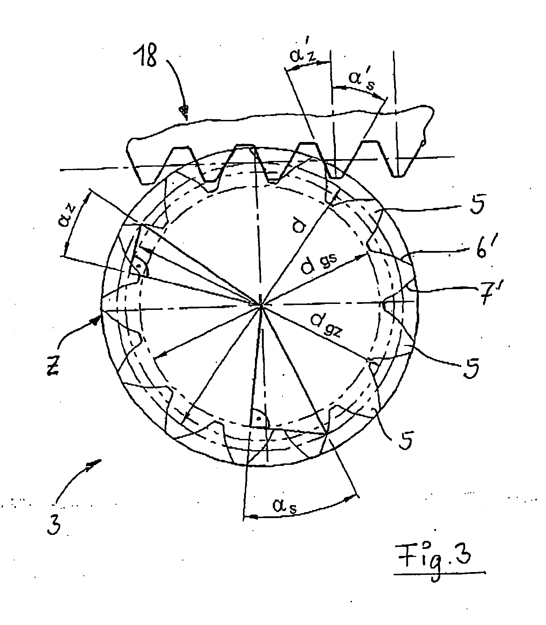

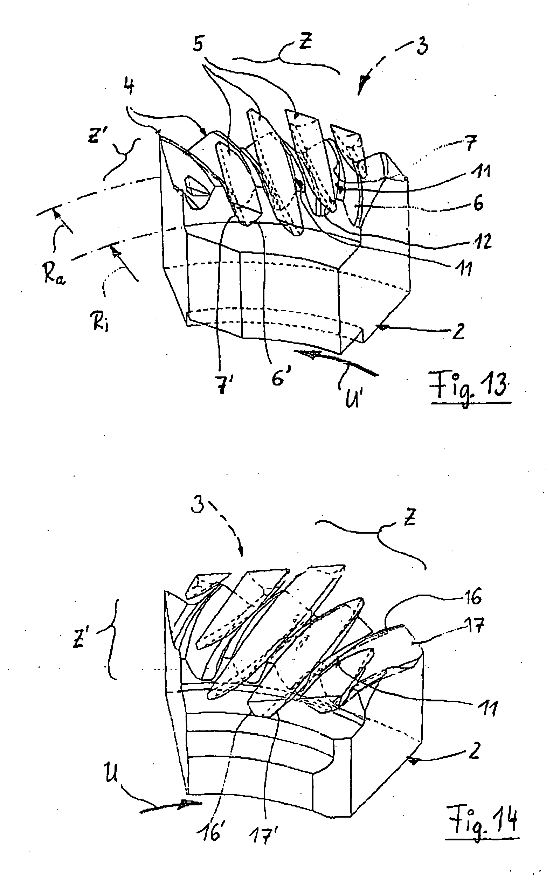

Ausgehend von diesen erfindungsgemäßen Überlegungen sind bei den beiden Hochleistungs-Profilen Z, Z' (Fig. 13) die jeweils ineinandergreifenden Zähne 4 des Rades 2 bzw. die Zähne 5 des Ritzels 3 mit ihren jeweiligen konvexen Zug-Zahnflanken 6 bzw. 6', 7' in ihrer Geometrie so aufeinander abgestimmt, daß mit diesem Getriebe 1 eine maximale Drehmoment- und Drehzahlübertragung bei geringster Geräuschentwicklung erreicht wird. Die konkaven Schub-Zahnflanken 7 des Kronenrades 2 sind nur für die gelegentliche Rückwärtsbewegung (nicht dargestellt) vorgesehen. Das Antriebsritzel 3 ist dabei mit unsymmetrischen Zahnflanken 7', 6' (Fig. 3, Fig. 13) bzw. 16', 17' (Fig. 2, Fig. 14) versehen. Es versteht sich, daß das zylinderförmige Ritzel (Stirnrad) mit einer beispielsweise ca. dem 2-fachen Modul ($m_n$) entsprechenden Tiefe in die jeweilige Verzahnung Z' des Kronenrades 2 eingreift.

Eine erste Vorwärtsbewegung im Hochelstungsbereich (Fig. 1)wird erfindungsgemäß dadurch definiert, daß das rechtssteigende und unsymmetrische Zahnflanken 6', 7' (Fig. 13) aufweisende Antriebsritzel 3 bei negativem Achsversatz a im Uhrzeigersinn (Pfeil G, Fig. 1) angetrieben ist und mit dem gegen den Uhrzeigersinn U' drehenden Kronenzahnrad 2 (Zahnflanken: 6, 7) zusammenwirkt (Fig. 1, Fig. 4).

Eine zweite Vorwärtsbewegung (Fig. 2) im Hochleistungsbereich wird analog dadurch definiert, daß das linkssteigende und unsymmetrische Zahnflanken 16', 17' aufweisende Antriebsritzel 3 bei positivem Achsversatz a entgegen dem Uhrzeigersinn (Pfeil G', Fig. 2) angetrieben ist und mit im Uhrzeigersinn U drehendem Kronenzahnrad 4 (Zahnflanken: 16, 17) zusammenwirkt (Fig. 14).

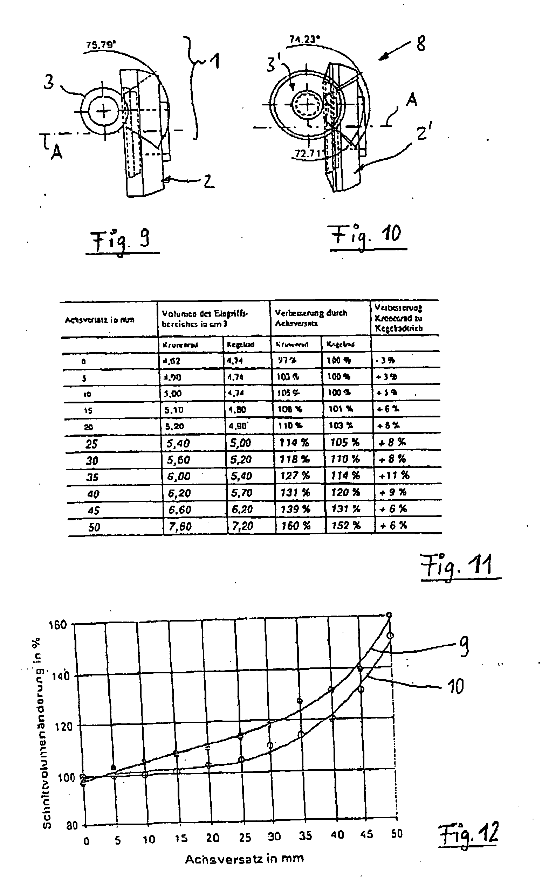

Auf Grundlage dieser erfindungswesentlichen Definitionen, jeweiliger sich aus Fig. 4 bis 9 ergebender 2-dimensionaler geometrischer Bezugsgrößen und einer erstmals das Schnittvolumen E (Fig. 12) als 3-dimensionales Element nutzenden Grenzvuertanalyse wird eine konstruktiv verwertbare Geometrie des Getriebes 1 aufgebaut. Erstmals wird dabei in Abhängigkeit vom jeweils durch den Einbauraum des Getriebes 1 vorgegebenen Schnittvolumen E eine Berechnung des Achsversatzes a (Tabelle, Fig. 11) durchgeführt und damit eine belastungsoptimale bzw. -maximale Auslegung des Getriebes 1 erreicht.

Für diesen Achsversatz a des als zylindrisches Stirnrad mit unsymmetrischen Zahnflanken ausgebildeten Antriebsritzels 3 gilt dabei:

$$a = K * (R_a - B - ((2 * z_1 * m_n^2)^{1/2})),$$

wobei als konstruktive Bezugsgrößen mit B eine Zahnbreite des Kronenzahnrades 2, mit $R_a$ ein äußerer Radius des Kronenzahnrades 2, mit $m_n$ ein Modul (Normalmodul), mit $Z_1$ eine Zähnezahl des Antriebsritzels 3 und mit K eine Konstante im Bereich von vorzugsweise K = 0,9 bis 0,4 vorzugeben sind.

Ausgehend von der Betrachtung des Schnittvolumens E, dem mathematischen Zusammenhang des Abstands a und einer Zusammenschau von Fig. 9 bis 12 wird (anhand eines Kronenrädes 2 mit einem Radius $R_a$ = 87,5 mm) ein direkter Vergleich des erfindungsgemäßen Kronenrad-Antriebs 1 mit einem aus dem Stand der Technik bekannten, ein Kegelritzel 3' und ein Kegelrad 2' aufweisenden Kegelrad-Antrieb 8 geführt. Eine den Achsversatz a im Verhältnis mit jeweiligen Schnittvolumen E darstellende Tabelle in Fig. 11 macht deutlich, daß die Kronenzahnrad-Antriebsritzel-Verbindung des erfindungsgemäßen Winkelgetriebes 1 im Vergleich zum gleiche Abmessungen aufweisenden Kegelradgetriebe 8 (Fig. 10) ein um 5 % bis 20 %, vorzugsweise 8 bis 11 %, vergrößertes Schnittvolumen E (Eingriffsbereich in cm³) aufweist.

Dabei kann unter vorgegebenen Einbaubedingungen, beispielsweise ausgehend von einer erreichbaren Größe des Kronenrades, das Antriebsritzel 3 mit dem Achsversatz a in einen optimalen Bereich verlagert werden. Für weitgehend beliebige Größen von Kronerädem 2 ergibt sich damit ein praktisch reproduzierbarer, mit einem jeweils definierten Achsversatz a versehener Konstruktionsbereich, in dem Kronenzahnrad-Antriebe bei gleichen Abmessungen höhere Belastungen aufnehmen und damit höhere Drehmomente übertragen können als Kegelräder 8 (Fig. 10).

Die in Fig. 11 aufgelisteten Rechenwerte für Kronenräder und Kegelräder mit jeweils verändertem Achsversatz sind in Fig. 12 grafisch dargestellt. Die daraus entnehmbare Tendenz aus zwei Vergleichskurven (nämlich: aus einer mathematischen Funktion errechnete Kurve 9 zeigt das Schnittvolumen E des erfindungsgemäßen Kronenrad-Antriebs; und: mit einer Kurve 10 ist das Schnittvolumen E bei vergleichbarem Kegelradantrieb 8 verdeutlicht) zeigt für die beiden Antriebe jeweilige "Eingriffsvolumen" ($\hat{=}$ E), womit eine bisher von der Fachwelt nicht erkannte Erhöhungstendenz für den Kronenrad-Antrieb 1 erfindungsgemäßer Ausführung nachgewiesen ist. Schon daraus ergibt sich die erhöhte Leistungsfähigkeit des erfindungsgemäßen Getriebes 1. Diese in höhere Belastbarkeiten von Kronenradgetrieben umsetzbaren Verbesserungen bleiben - nach entsprechender Berechnung des Achsversatzes a - auch für geänderte Kronenrad- (bzw. Kegelrad-) Geometrien in der Tendenz des Diagramms (Fig. 12) erhalten. Diese Verbesserungen der Leistungsparameter für entsprechend dimensionierte und bereits praktisch realisierte Winkelgetriebe 1 wurden bereits an Prototypen für den Automobilbau nachgewiesen.

In den Draufsichten gemäß Fig. 4 und 5 wird deutlich, daß zwischen den beiden geometrischen Grundkörpern des Rades 2 und des Ritzels 3 die in Eingriff befindlichen Hochleistungsverzahnungen Z und Z' einen Schrägungswinkel β bilden, dessen jeweilige Größe sich vorzugsweise im Bereich von ca. 25° bis ca. 40° ergibt. Es hat sich gezeigt, daß bei dominierender Vorwärtsbewegung (Pfeil G, G') durch Einleitung der Drehrichtung U, U' über die konvexen Zugflanken 6 bzw. 16 (Fig. 13, 14) der Schrägungswinkel β eine Größe von ca. 25° aufweist und damit ohne großen technischen Aufwand ein jeweiliger Überdeckungsgrad Ü der Verzahnungen Z, Z' von Ü > 2 (vorzugsweise bis Ü ≤ 5) erreicht wird.

Bei der in Kraftfahrzeugantrieben gelegentlichen Rückwärtsbewegung wird aber die konkave Schubflanke 7 bzw. 17 des Kronenrades 2 benutzt, die bei diesem Schrägungswinkel β von ca. 25° nur ein Überdeckungsgrad Ü < 2 zuläßt, so daß das Geräuschverhalten des Antriebes 1 in diesem Bereich sehr nachteilig beeinflußt ist. In praktischen Versuchen hat sich jedoch gezeigt, daß der Antrieb 1 bei einem Überdeckungsgrad Ü > 2 in beiden Drehrichtungen U und U' ohne negative Störgeräusche arbeitet. Durch eine Vergrößerung des Schrägungswinkels β bis ca. 40° wird diese geringe Geräuschentwicklung auch auf der konkaven Schubflanke 7 bzw. 17 erreicht. Um die Anforderungen an die hohen Leistungen des Antriebs 1 zu realisieren, ist für dessen Verzahnungen Z und Z' ein spezieller Fertigungsablauf erforderlich. In Fig. 3 ist in einer Prinzipdarstellung eine Herstellungsphase für das evolventische Antriebsritzel 3 mittels eines Verzahnungswerkzeugs 18 dargestellt. Dabei wird eine Erzeugung des unsymmetrischen Zahnquerschnitts im Bereich der Zähne 5 mittels des unsymmetrische Eingriffswinkel $\alpha_z$' und $\alpha_s$' aufweisenden Werkzeugs 18 deutlich. Die Eingriffswinkel $\alpha_s$ und $\alpha_z$ ergeben sich aus der Berechnung am Ritzel 3, wobei $\alpha_z$ der Eingriffswinkel der Zugflanke, $\alpha_s$ der Eingriffswinkel der Schubflanke, d der Teilkreisdurchmesser, $d_{gz}$ der Grundkreis der Zugflanke und $d_{gs}$ der Grundkreis der Schubflanke ist.

Eine fertigungstechnische Grenze ist dabei durch eine kollisionsfreie Fertigung (in Abhängigkeit von Winkel β, Fig. 5) der komplementären und ebenfalls unsymmetrischen Zahngeometrie (Zähne 4; Fig. 1) im Bereich des Kronenrades 2 gesetzt, wobei dessen Herstellung nicht dargestellt ist. Die Fertigung der Verzahnungen Z, Z' zeichnet sich durch die Anwendung hochproduktiver Wälzfräsverfahren für normale (weiche) Verzahnungen aus und bei gehärteten Verzahnungen kommen Wälzschleifen o. dgl. Verfahren zur Anwendung.

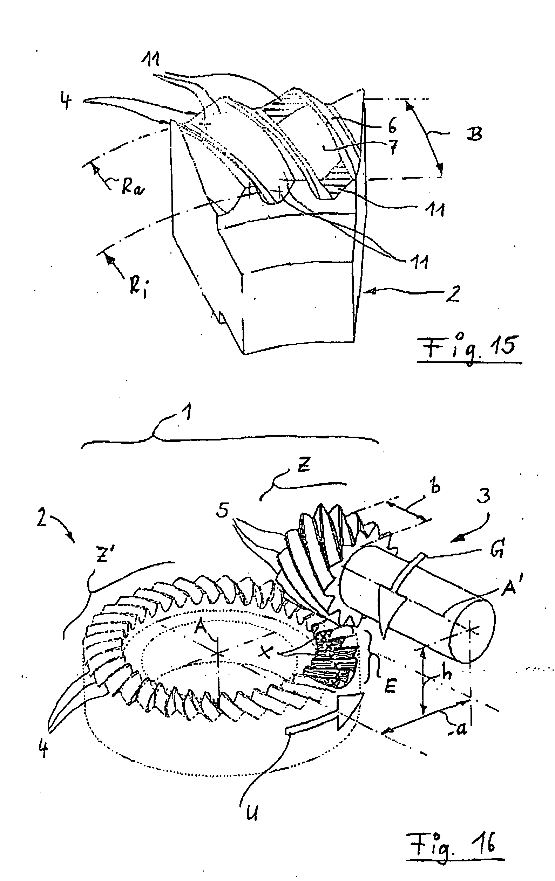

Für eine optimale Auslegung des Getriebes 1 ist vorgesehen, daß insbesondere die konkaven Schubflanken 7, 17 des Kronenrades 2 mit einer äußeren und/oder inneren tangentialen Kantenrücknahme 11 versehen werden, um eine weitere Verbesserung des Geräusch- und Tragverhaltens zu erreichen (Fig. 15, Kreuz- bzw. Schraffurdarstellung). In der vergrößerten Ausschnittsdarstellung gemäß Fig. 13 und 14 sind jeweils für den negativen bzw. positiven Achsversatz a die geometrischen Gestaltungen von Rad 2 und Ritzel 3 näher veranschaulicht, wobei die konkave Zahnflanke 7 (Fig. 13) des schrägverzahnten Kronenzahnrades 2 im Nahbereich zum Innen- und/oder Außendurchmesser $R_a$ bzw. $R_i$ zumindest bereichsweise mit der tangentialen Kantenrücknahme 11 (Fig. 15) versehen ist. Damit wird erreicht, daß bereits bei minimalen Fertigungs- und Einbaufehlem als Kantenträger bezeichnete Anlagezonen der kämmenden Zähne 4, 5 vermieden sind, damit eine weitgehend durch die Berührlinie bestimmte Krafteinleitung an den Zahnflanken wirksam wird und diese ein gleichmäßiges und ausreichendes Tragbild aufweisen.

Der Vergleich von Fig. 13 und Fig. 14 verdeutlicht auch, daß das Kronenzahnrad 2 im Bereich seiner Zähne 4 ein jeweils die Zug-Zahnflanke 6 und die Schub-Zahnflanke 7 definierendes Querschnittsprofil aufweist, wobei die bei Vorwärtsbewegung wirksame Zug-Zahnflanke 6 konvex ausgebildet ist und die bei Rückwärtsbewegung wirksame Schub-Zahnflanke 7 eine konkave Kontur aufweist. Um diese Profilgestaltung der Zähne 4 für den Hochleistungsbereich auszulegen, wird die konvexe Zug-Zahnflanke 6 entsprechend der Wälzfähigkeit der Verzahnungen Z, Z' komplementär zum Eingriffswinkel $\alpha_z$ des Werkzeuges 18 (Fig. 3) gefertigt. Dieser Eingriffswinkel $\alpha_z$' ist dabei kleiner als der Eingriffswinkel $\alpha_s$'. Bei den konvexen und konkaven Zug- bzw. Schub-Zahnflanken 6 und 7 (Fig. 1, Fig. 2) sind die komplementären Verhältnisse vorgesehen, so daß sich für den gesamten Bereich des Schnittvolumens E (Fig. 7, Fig. 8) optimale Tragbilder ergeben.

Mit diesem vorbeschriebenen, jeweils links- oder rechtssteigenden Kronenzahnrad 2 wirkt das komplementäre schrägverzahnte zylindrische Antriebsritzel 3 im Bereich des Schnittvolumens E (Fig. 7, Fig. 8) zusammen, wobei diese Eingriffsbedingungen der komplementären Zähne 4, 5 in jeweiligen Schnittdarstellungen gemäß Fig. 13 und 14 verdeutlicht werden. Die Zähne 5 des Antriebsritzels 3 können dabei zumindest bereichsweise auch mit einer unsymmetrischen Höhenballigkeit versehen werden, so daß unzulässig hohe Flankenbelastungen am Zahnfuß bzw. Zahnkopf vermieden werden.

Es versteht sich, daß das Kronenzahnrad 2 eine zum kämmenden evolventischen Antriebsritzel 3 im wesentlichen komplementär geformte Verzahnung aufweist und dabei jeweilige nicht dargestellte Kantenrücknahmen nur an der konvexen Schub-Zahnflanke 6', 16' vorgesehen sind, um einen unbeeinflußten Rückwärtsgang zu ermöglichen.

In Fig. 16 ist in einer Explosivdarstellung das Antriebsritzel 3 nach oben verlagert (Höhe h) und damit außer Eingriff dargestellt. Damit werden die in der Antriebsphase (Fig. 1) nicht sichtbaren Eingriffsverhältnisse im Bereich der Zähne 4 und 5 bzw. des von diesen definierten Schnittvolumens E ("Eingriffsvolumen") deutlich. Die Breite b des Ritzels 3 (Fig. 7) führt in der vergrößerten Zone des Schnittvolumens E zu jeweiligen durch X-Markierungen verdeutlichten und innerhalb des schraffierten "Berührungsbereichs" von Rad 2 und Ritzel 3 wirksamen Trag- oder Berührflächen . Diese Bereiche verteilen sich bei der Drehmomenteinleitung auf die durch die Schraffur gekennzeichneten Zahnflanken, wobei die mit G und U' dargestellte Antriebsrichtung des Kronenrades 2 wirksam ist. Durch diese Kombination an sich bekannter Merkmale von Verzahnungsgeometrien wird bei dieser Ritzeldrehrichtung G der Eingriffsbereich vergrößert, so daß in dieser Zone zusätzliche Kronenradzähne - im in Blickrichtung (Fig. 16) hinteren schraffierten Bereich - bei der Übertragung von hohen Drehmomenten mitwirken. Bisher wurde dieser Bereich nicht genutzt, da nach /13; 14/ dieser hintere Bereich durch einen Unterschnitt von einer Übertragung von Drehmomenten ausgenommen war und gemäß dieser allgemein anerkannten Fachmeinung die maximale Momentenübertragung am Kronenrad nur dann erreichbar sei, wenn ein Antriebsritzel ohne Achsversatz a und mit symmetrischen Zähnen ausgeführt würde.

Mit dieser dreidimensionalen Prinzipdarstellung gemäß Fig. 16 wird der bisher nicht erkannte und erfindungsgemäß erweiterte Eingriffsbereich bzw. das vergrößerte Schnittvolumen E als Grundlage der erhöhbaren Übertragungsleistung des Antriebes 1 grafisch deutlich. Diese technischen Möglichkeiten einer Erweiterung des Schnittvolumens E bei Kronenradgetrieben wird erstmals in die Betrachtungen einbezogen und mit einer Berechnung des Achsversatzes a für ein erfindungsgemäßes Getriebe 1 konstruktiv umgesetzt.

Mit der vorbeschriebenen Hochleistungs-Verzahnung wird ein für den Hochleistungsbereich vorgesehenes Getriebe 1 geschaffen (Fig. 2; Fig. 14; Fig. 16), bei dem durch

- eine vorgesehene Drehrichtung G',
- ein einen großen positiven Achsversatz a aufweisendes, linkssteigendes unsymmetrisches Ritzel 3 (dessen Zugflanke einen kleinen Eingriffswinkel $\alpha_z$ und dessen Schubflanke einen großen Eingriffswinkel $\alpha_s$ aufweist),
- ein damit bewirktes maximales Schnitkvolumen E der Verzahnung Z, Z',
- ein eine Zahngeometrie mit konvexer Zugflanke 16 sowie einer konkaven Schubflanke 17 aufweisendes Kronenrad 2, und
- eine jeweilige tangentiale Kantenrücknahme 11 (der konkaven Schubflanke 17) ein kleinbauender Hochleistungs-Kronenradantrieb mit einem Achsversatz a definiert ist (Fig. 2). Es versteht sich, daß für eine zweite Drehrichtung G (Fig. 1, Fig. 13) analoge Einbau- und Dimensionierungsbedingungen gelten.

Dieser Antrieb mit Hypoidversatz ist insbesondere für Drehmomente im Bereich von 50 Nm bis 1000 Nm, vorzugsweise 200 Nm, übertragende Kronenradgetriebe 1 konzipiert, Erste Prototypen haben gezeigt, daß das Hochleistungs-Kronenrad-Getriebe 1 erfindungsgemäßer Ausführung erstmals für den Antrieb eines Kraftfahrzeugs, vorzugsweise der Hinterachse eines Pkw, erfolgreich einsetzbar ist. Das Getriebe 1 ist damit an Stelle eines aufwendigen und großbauenden Kegelradgetriebes 8 in eine Antriebskinematik integrierbar.

## Patentansprüche

1. Antriebsbaugruppe mit einem Getriebe, bestehend aus Kronenzahnrad (2) und einem in dieses eingreifenden schrägverzannten, vorzugsweise evolventischen Stirnrad als Antriebsritzel (3), wobei in diesem Winkelgetriebe axiale Lageabweichungen im Bereich der Verzahnung (Z, Z') ausgleichbar sind und das Kronenzahnrad (2) sowie das zu dessen Antriebsdrehachse (A) mit positivem oder negativem Achsversatz (a) angeordnete Antriebsritzel (3) eine jewellige Hochleistungsverzahnung (Z, Z') aufweisen, **dadurch gekennzeichnet, daß**

   - ein einen berechenbaren positiven Achsversatz (+a) sowie linkssteigende und unsymmetrische Zahnflanken (16', 17') aufweisendes Antriebsritzel (3) mit einem im Uhrzeigersinn (U) drehenden Kronenzahnrad (2) oder
   - ein einen berechenbaren negativen Achsversatz (-a) und rechtssteigende sowie unsymmetrische Zahnflanken (6', 7) aufweisendes Antriebsritzel (3) mit einem gegen den Uhrzeigersinn (U') drehenden Kronenzahnrad (2) eine jeweilige Vorwärtsbewegung definiert,
   - das Kronenzahnrad (2) und das Antriebsritzel (3) ein die Leistungsparameter dieses Getriebes (1) wesentlich beeinflussendes gemeinsames Schnittvolumen (E) bilden,
   - bei diesem der jeweilige Achsversatz a des als zylindrisches Stirnrad ausgebildeten Antriebsritzels (3) im Bereich des Kronenzahnrades (2) gemäß einer Bedingung

$$a = K * (R_a - B - ((2 * z_1 * m_n^2)^{1/2}))$$

   definierbar ist, und
   - dabei eine Zahnbreite B des Kronenzahnrades (2), ein äußerer Radius $R_a$ des Kronenzahnrades (2), ein Modul $m_n$ (Normalmodul), eine Zähnezahl $z_1$ des Antriebsritzels (3) und eine Konstante K im Bereich von 0,9 bis 0,4 vorgebbar sind.

2. Antriebsbaugruppe nach Anspruch 1, **dadurch gekennzeichnet, dass** ein jeweiliges in eine Antriebskinematik integrierbares sowie drehrichtungsabhängig dimensionierbares Hochleistungs-Kronenrad-Getriebe (1) gebildet ist.

3. Antriebsbaugruppe nach einem der Ansprüche 1 bis 2, **dadurch gekennzeichnet, daß** der wahlweise positiv oder negativ berechenbare Achsversatz (a) ein Eingriffsvolumen (E) bewirkt, in dem das zylindrische sowie eine Breite (b) definierende Antriebsritzel (3) mit dem komplementären Kronenzahnrad (2) optimal zusammenwirkt.

4. Antriebsbaugruppe nach einem der Ansprüche 1 bis 3, **dadurch gekennzeichnet, daß** das Kronenzahnrad (2) im Bereich seiner Zähne (Z') ein jeweils die Zug-Zahnflanke und die Schub-Zahnflanke definierendes Querschnittsprofil aufweist und dabei die bei Vorwärtsbewegung wirksame Zug-Zahnflanke (6,16) konvex sowie die bei Rückwärtsbewegung wirksame Schub-Zahnflanke (7, 17) konkav ausgebildet sind.

5. Antriebsbaugruppe nach einem der Ansprüche 1 bis 4, **dadurch gekennzeichnet, daß** die konkave Schub-Zahnflanke (7; 17) des Kronenzahnrades (2) im Nahbereich zum Innen- und/oder Außendurchmesser ($R_i$, $R_a$) zumindest bereichsweise mit einer tangentialen Kantenrücknahme (11) versehen ist.

6. Antriebsbaugruppe nach einem der Ansprüche 1 bis 5, **dadurch gekennzeichnet, daß** das schrägverzahnte evolventische Antriebsritzel (3) vorzugsweise durch einen Schrägungswinkel ($\beta$) von 25° bis 40° definiert wird.

7. Antriebsbaugruppe nach einem der Ansprüche 1 bis 6, **dadurch gekennzeichnet, daß** das schrägverzahnte evolventische Antriebsritzel (3) unsymmetrische Zahnflanken (6' und 7') aufweist, deren Eingriffswinkel ($\alpha_z$) auf der Zug-Zahnflanken kleiner ist als der Eingriffswinkel ($\alpha_s$) der Schub-Zahnflanke, wobei die Grenzen dieser Eingriffswinkel vorzugsweise durch $\alpha_z > 10°$ und $\alpha_s < 35°$ definiert sind.

8. Antriebsbaugruppe nach einem der Ansprüche 1 bis 7, **dadurch gekennzeichnet, daß** das schrägverzahnte evolventische Antriebsritzel (3) bzw. das Kronenzahnrad (2) mit zumindest bereichsweise eine unsymmetrische Höhenballigkeit aufweisenden Zähnen (Z, Z') versehen ist.

9. Antriebsbaugruppe nach einem der Ansprüche 1 bis 8, **dadurch gekennzeichnet, daß** das Kronenzahnrad (2) eine zum kämmenden evolventischen Antriebsritzel (3) im komplementäre Verzahnung aufweist.

10. Antriebsbaugruppe nach einem der Ansprüche 1 bis 9, **dadurch gekennzeichnet, daß** die Hochleistungsverzahnung (Z, Z') für ein Drehmomente im Bereich von 50 Nm bis 1000 Nm, vorzugsweise 200'Nm, übertragendes Getriebe (1) vorgesehen ist.

11. Antriebsbaugruppe nach einem der Ansprüche 1 bis 10, **dadurch gekennzeichnet, daß** das Hochleistungs-Kronenrad-Getriebe (1) für den Antrieb eines Kraftfahrzeugs, vorzugsweise der Hinterachse eines Pkw, vorgesehen ist.

12. Antriebsbaugruppe nach einem der Ansprüche 1 bis 11, **dadurch gekennzeichnet, daß** das Getriebe (1) für einen eine dominierende Vorwärts- und eine gelegentliche Rückwärtsbewegung aufweisenden Antrieb vorgesehen ist.

13. Antriebsbaugruppe nach einem der Ansprüche 1 bis 12, **dadurch gekennzeichnet, daß** das Getriebe (1) an Stelle eines Kegelradantriebes (8) in eine Antriebskinematik integrierbar ist.

**Claims**

1. Drive assembly having gearing comprising a crown gear (2) and a helical, and preferably involute helical, spur gear which meshes therewith and acts as a drive pinion (3), differences in axis position in the region of the gear teeth (Z, Z') being able to be compensated for in this angle gearing, and the crown gear (2) and the drive pinion (3), which latter is arranged with a positive or negative offset (a) of its axis from the axis (A) on which the crown gear (2) is driven, having respective sets of high-performance teeth (Z, Z'), **characterised in that** a forward movement is defined by,

  - a drive pinion (3) having a calculable positive offset (+a) of its axis and having asymmetrical tooth flanks (16', 17') following a left-hand helix, paired with a crown gear (2) rotating in the clockwise direction (U),
  or
  - a drive pinion (3) having a calculable negative offset (-a) of its axis and having asymmetrical tooth flanks (6', 7') following a right-hand helix, paired with a crown gear (2) rotating in the anticlockwise direction (U'),
  - the crown gear (2) and the drive pinion (3) creating a common volume of intersection (E) which has a substantial effect on the performance parameters of the gearing (1),

- in which intersecting volume the given offset a, in the region of the crown gear (2), of the axis of the drive pinion (3) in the form of a cylindrical spur gear can be defined by an equation

$$a = K * (R_a - B - ((2 * z_1 * m_n^2)^{1/2})),$$

and
- the width B of the teeth of the crown gear (2), the outside radius $R_a$ of the crown gear (2), the module $M_n$ (normal module), the number of teeth $z_1$ of the drive pinion (3) and a constant K can be preset in the range from 0.9 to 0.4.

2. Drive assembly according to claim 1, **characterised in that** there is formed in each case high-performance crown-gear gearing (1) which can be sized as a function of its direction of rotation and which can be incorporated in a kinematic drive train.

3. Drive assembly according to either of claims 1 and 2, **characterised in that** the offset (a) of the axis, which can be calculated as positive or negative as desired, produces a volume of intersection (E) in which the cylindrical drive pinion (3), which defines a width (b), co-operates in an optimum way with the complementary crown gear (2).

4. Drive assembly according to one of claims 1 to 3, **characterised in that**, in the region of its teeth (Z'), the crown gear (2) has a profile in cross-section which defines in each case the driving-side tooth flank and the coasting-side tooth flank and the driving-side tooth flank (6, 16), which acts in forward movement, is of a convex form in this case and the coasting-side tooth flank (7, 17), which acts in movement in reverse, is of a concave form in this case.

5. Drive assembly according to one of claims 1 to 4, **characterised in that** the concave coasting-side tooth flank (7, 17) of the crown gear (2) is provided at least in a region with a tangential edge relief (11) in the region close to the inside and/or outside circumference ($R_i$, $R_a$).

6. Drive assembly according to one of claims 1 to 5, **characterised in that** the involute helical drive pinion (3) is preferably defined by a helix angle ($\beta$) of 25° to 40°.

7. Drive assembly according to one of claims 1 to 6, **characterised in that** the involute helical drive pinion (3) has asymmetrical tooth flanks (6' and 7') whose pressure angle ($\alpha_z$) on the driving-side tooth flank is less than their pressure angle ($\alpha_s$) on the coasting-side tooth flank, the limits on these pressure angles preferably being defined by $\alpha_z > 10°$ and $\alpha_s < 35°$.

8. Drive assembly according to one of claims 1 to 7, **characterised in that** the involute helical drive pinion (3) and/or the crown gear (2) is provided with teeth (Z, Z') which have asymmetrical profile crowning at least in a region or regions.

9. Drive assembly according to one of claims 1 to 8, **characterised in that** the crown gear (2) has a set of teeth which are complementary to the meshing involute drive pinion (3).

10. Drive assembly according to one of claims 1 to 9, **characterised in that** the sets of high-performance teeth (Z, Z') are intended for gearing (1) which transmits a torque in the range from 50 Nm to 1000 Nm and preferably 200 Nm.

11. Drive assembly according to one of claims 1 to 10, **characterised in that** the high-performance crown-gear gearing (1) is intended for driving a motor vehicle and preferably the rear axle of a passenger car.

12. Drive assembly according to one of claims 1 to 11, **characterised in that** the gearing (1) is intended for a drive giving predominantly forward movement and occasionally movement in reverse.

13. Drive assembly according to one of claims 1 to 12, **characterised in that** the gearing (1) can be incorporated in a kinematic drive train in place of a bevel-gear drive (8).

**Revendications**

1. Groupe d'entraînement à engrenage, constitué d'une couronne dentée (2) et d'une roue droite comme pignon d'entraînement (3) à denture à flanc oblique, s'engrenant dans ladite couronne et de préférence à développante, des désalignements axiaux dans cet engrenage angulaire dans la zone de la denture (Z, Z') pouvant être compensés et la couronne dentée (2) et le pignon d'entraînement (3) disposé par rapport à l'axe d'entraînement (A) de ladite couronne avec un décalage d'axe positif ou négatif (a) comprenant une denture très performante (Z, Z') respective, **caractérisé en ce que**

   - un pignon d'entraînement (3) comprenant un décalage d'axe positif (+a) calculable et des faces de dent (16', 17') montant vers la gauche et asymétriques et doté d'une couronne dentée (2) tournant dans le sens horaire (U) ou
   - un pignon d'entraînement (3) comprenant un décalage d'axe négatif (-a) calculable et des faces de dent (6', 7) montant sur la droite et asymétriques et doté d'une couronne dentée (2) tournant dans le sens antihoraire (U') définit un déplacement vers l'avant respectif
   - la couronne dentée (2) et le pignon d'entraînement (3) forment un volume de coupe (E) commun influençant sensiblement les paramètres de performance de cet engrenage (1),
   - pour ledit volume, le décalage d'axe (a) respectif du pignon d'entraînement (3) réalisé comme une roue droite cylindrique dans la zone de la couronne dentée (2) peut être défini selon une condition

$$a = K * (R_a - B - ((2 * z_1 * m_n^2)^{1/2}))$$

   et
   - une largeur de dent B de la couronne dentée (2), un rayon extérieur $R_a$ de la couronne dentée (2), un module $m_n$ (module normal), un nombre de dents $z_1$ du pignon d'entraînement (3) et une constante K peuvent être prédéfinis dans la plage de 0,9 à 0,4.

2. Groupe d'entraînement selon la revendication 1, **caractérisé en ce qu'**un engrenage à couronne dentée très performant (1) respectif pouvant être intégré dans une cinématique d'entraînement et pouvant être dimensionné en fonction du sens de rotation est formé.

3. Groupe d'entraînement selon l'une quelconque des revendications 1 à 2, **caractérisé en ce que** le décalage d'axe (a) calculable de manière sélectivement positive ou négative produit un volume d'engrènement (E) dans lequel le pignon d'entraînement (3) cylindrique et définissant une largeur (b) coopère de façon optimale avec la couronne dentée (2) complémentaire.

4. Groupe d'entraînement selon l'une quelconque des revendications 1 à 3, **caractérisé en ce que** la couronne dentée (2) comprend dans la zone de ses dents (Z') un profil transversal définissant respectivement la face de dent en traction et la face de dent en poussée et la face de dent en traction (6, 16) active en cas de déplacement vers l'avant et la face de dent en poussée (7, 17) active en cas de déplacement vers l'arrière sont concaves.

5. Groupe d'entraînement selon l'une quelconque des revendications 1 à 4, **caractérisé en ce que** la face de dent en poussée concave (7 ; 17) de la couronne dentée (2) est pourvue à proximité du diamètre intérieur et/ou extérieur ($R_i$, $R_a$) au moins par zones d'un retrait tangentiel d'arête (11).

6. Groupe d'entraînement selon l'une quelconque des revendications 1 à 5, **caractérisé en ce que** le pignon d'entraînement (3) à denture à flanc oblique et à développante est défini de préférence par un angle d'obliquité (β) de 25° à 40°.

7. Groupe d'entraînement selon l'une quelconque des revendications 1 à 6, **caractérisé en ce que** le pignon d'entraînement (3) à denture à flanc oblique et à développante comprend des faces de dent (6' et 7') asymétriques dont l'angle de pression ($\alpha_z$) sur la face de dent en traction est inférieur à l'angle de pression ($\alpha_s$) de la face de dent en poussée, les limites de ces angles de pression étant définies de préférence par $\alpha_z > 10°$ et $\alpha_s < 35°$.

8. Groupe d'entraînement selon l'une quelconque des revendications 1 à 7, **caractérisé en ce que** le pignon d'entraînement (3) à denture à flanc oblique et à développante ou la couronne dentée (2) sont pourvus au moins par zones de dents (Z, Z') présentant un bombé de profil asymétrique.

9. Groupe d'entraînement selon l'une quelconque des revendications 1 à 8, **caractérisé en ce que** la couronne dentée (2) comprend une denture complémentaire du pignon d'entraînement (3) à développante et s'engrenant.

10. Groupe d'entraînement selon l'une quelconque des revendications 1 à 9, **caractérisé en ce que** la denture très performante (Z, Z') est prévue pour un engrenage (1) transférant des couples dans la plage de 50 Nm à 1000 Nm, de préférence de 200 Nm.

11. Groupe d'entraînement selon l'une quelconque des revendications 1 à 10, **caractérisé en ce que** l'engrenage à couronne dentée très performant (1) est prévu pour l'entraînement d'un véhicule automobile, de préférence de l'essieu arrière d'une voiture.

12. Groupe d'entraînement selon l'une quelconque des revendications 1 à 11, **caractérisé en ce que** l'engrenage (1) est prévu pour un entraînement comprenant un déplacement vers l'avant dominant et un déplacement vers l'arrière occasionnel.

13. Groupe d'entraînement selon l'une quelconque des revendications 1 à 12, **caractérisé en ce que** l'engrenage (1) peut être intégré à l'endroit d'un entraînement à roue conique (8) dans une cinématique d'entraînement.

Fig. 1

Fig. 2

Fig. 3

Fig. 4

Fig. 5

Fig. 6

Fig. 7

Fig. 8

Fig. 9

Fig. 10

| Achsversatz in mm | Volumen des Eingriffs-bereiches in cm3 | | Verbesserung durch Achsversatz | | Verbesserung Kronenrad zu Kegelradtrieb |
|---|---|---|---|---|---|
| | Kronenrad | Regelrad | Kronenrad | Kegelrad | |
| 0 | 4,62 | 4,74 | 97 % | 100 % | -3 % |
| 5 | 4,90 | 4,74 | 103 % | 100 % | +3 % |
| 10 | 5,00 | 4,74 | 105 % | 100 % | +5 % |
| 15 | 5,10 | 4,80 | 108 % | 101 % | +6 % |
| 20 | 5,20 | 4,90 | 110 % | 103 % | +6 % |
| 25 | 5,40 | 5,00 | 114 % | 105 % | +8 % |
| 30 | 5,60 | 5,20 | 118 % | 110 % | +8 % |
| 35 | 6,00 | 5,40 | 127 % | 114 % | +11 % |
| 40 | 6,20 | 5,70 | 131 % | 120 % | +9 % |
| 45 | 6,60 | 6,20 | 139 % | 131 % | +6 % |
| 50 | 7,60 | 7,20 | 160 % | 152 % | +6 % |

Fig. 11

Fig. 12

Achsversatz in mm

Fig. 13

Fig. 14

Fig. 15

Fig. 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0234058 B1
- US 1694028 A
- EP 1203900 A2
- WO 9958878 A
- EP 1203900 A
- US 2304586 A
- US 2311006 A
- US 9910527 W

### In der Beschreibung aufgeführte Nicht-Patentliteratur

- **ROTH, K.** Evolventen-Sonderverzahnung zur Getriebeverbesserung. Springer-Verlag, 1998, 159-169
- DUBBEL. 1987
- **GEARS, B.** *Machine Design,* vol. 4, 1947
- The Concems in Design, Manufacturing and Service of Face Gears. **STADTFELD, H.** Crown Gears. The Gleason Works, Rochester
- **LITVIN, F.L.** Design and Geometrie of Face-Gears-Drives. *Journal of Mechanical Design, Trans. of the ASME,* Dezember 1992, vol. 114
- **LANDVOGT.** Kronenräder-Erstellung einer Projekt-studie. *Forschungsheft 563,* 17. September 1998
- **HÖHN, THOMAS, MICHAELIS.** *Gutachtediche Untersuchung zur Tragfähigkeit einer Kronenradverzahnung,* 10. Dezember 1994